(19) Europäisches Patentamt / European Patent Office / Office européen des brevets

(11) **EP 4 310 748 B1**

(12) **EUROPEAN PATENT SPECIFICATION**

(45) Date of publication and mention
of the grant of the patent:
**04.12.2024 Bulletin 2024/49**

(21) Application number: **22207016.1**

(22) Date of filing: **11.11.2022**

(51) International Patent Classification (IPC):
*G06Q 10/0635* (2023.01) *G06Q 50/06* (2024.01)

(52) Cooperative Patent Classification (CPC):
**G06Q 10/0635; G06Q 50/06;** Y04S 10/50

(54) **HYDROPOWER STATION OPERATION RISK CONTROL SYSTEM BASED ON BLOCKCHAIN**

SYSTEM ZUR STEUERUNG VON BETRIEBSRISIKEN VON WASSERKRAFTWERKSANLAGEN AUF BASIS EINER BLOCKCHAIN

SYSTÈME DE CONTRÔLE DE RISQUES DE FONCTIONNEMENT DE STATIONS HYDROÉLECTRIQUES FONDÉ SUR UNE CHAÎNE DE BLOCS

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **22.07.2022 CN 202210873849**

(43) Date of publication of application:
**24.01.2024 Bulletin 2024/04**

(73) Proprietors:
• **China Three Gorges Co., Ltd.**
**Wuhan Hubei 430010 (CN)**
• **China Institute of Water Resources and Hydropower Research**
**Beijing 100036 (CN)**

(72) Inventors:
• **DAI, Huichao**
**Wuhan, 430010 (CN)**
• **SHANG, Yizi**
**Wuhan, 430010 (CN)**
• **JIANG, Dingguo**
**Wuhan, 430010 (CN)**
• **LI, Xiaofei**
**Wuhan, 430010 (CN)**
• **SHANG, Ling**
**Wuhan, 430010 (CN)**
• **LIU, Zhiwu**
**Wuhan, 430010 (CN)**
• **DUAN, Pei**
**Wuhan, 430010 (CN)**

(74) Representative: **Lavoix**
**Bayerstraße 83**
**80335 München (DE)**

(56) References cited:
**CN-A- 113 177 731**

EP 4 310 748 B1

## Description

## Technical Field

The present invention relates to the technical field of hydropower station management, and specifically to a hydropower station operation risk control system based on blockchain.

## Background Art

The development method in which hydroelectric hubs are distributed in a stepped manner from the upstream to the downstream of the river is called stepped development, and a series of hydropower stations built in this way are called stepped hydropower stations, which can develop and utilize a water head in stages, develop and reuse the water quantity for many times, with an obvious advantageous characteristic of making full use of hydraulic energy. As to the utilization of stepped hydropower stations, with water level control as a guidance, and by comparing characteristic water levels and considering differences in the characteristics and regulation of each hydropower station, and hydrological and hydraulic connections between the stepped hydropower stations, a compensation effect of the reservoir capacity, hydrology and hydraulic energy and the like of each reservoir is fully utilized to maximize the utilization of the hydropower resources on the basis of security, i.e., the economic benefits are brought into play while taking into account safe use of flood control and flood storage, as well as the beneficial effects of irrigation and ecological water use. However, the use of the stepwise manner is also accompanied by a series of difficulties, the stepped hydropower stations consist of a number of single-stage power stations connected in series, the upper-stage power stations and the lower power stations are connected through backwater of the reservoir area, the control range can extend from a river to an entire basin, the risk of uncontrolled upstream power station is transmitted through water flow fluctuations, superposition and accumulation step by step are performed in the downstream power stations, and a greater disaster will occur after the risk.

The stepped hydropower station will generate a large amount of data information every moment, while a data management mechanism of a traditional stepped hydropower station generally adopts a cloud-centered mode for data storage and calling, showing serious centralization, therefore, it is not only difficult to make the risk data credible and transparent, but it is also difficult to effectively carry out acquisition and calling of parameterization solutions in actual applications. Due to a non-public sharing feature of the centralized data management mechanism, "information islands" are also formed among various hydropower stations. Even if a single hydropower station can realize smart operation, it is also difficult to deal with risks brought about by transmission and superposition under the background of stepped development; moreover, the characteristics of cloud calculation also cause a hidden danger that once a failure occurs, the calculation and analysis system will be completely paralyzed. Facing the risk prevention, efficiency and effectiveness are quite low due to such response and scheduling. However, due to limited operation time of stepped hydropower stations, it is difficult for each single hydropower station to experience all types of risks, especially some risks with extremely low probability and rare occurrence. This also causes many hydropower stations, especially some small hydropower stations, to lead to misjudgment while facing risks, and then produce a series of wrong operations, and even the problem of low efficiency of repeated analysis and calculation of similar or even the same risks in the stepped development system caused by information occlusion may occur, and many substantive problems of data storage, application, and calling are difficult to be solved effectively. In short, security scheduling of stepped hydropower stations faces the phenomenon of single risk data information and serious asymmetry between hydropower stations in terms of data.

In CN 113 177 731 A a water resource decision management system is shown which is used for carrying out decision and management on water distribution wherein all water user nodes are divided into three branch chains according to the type of water users. A central node is set for each branch chain to be responsible for the authority authorization, verification and supervision of each node on the branch chain.

## Summary of the Invention

Accordingly, the technical problem to be solved in the present invention is to overcome the defects of the prior art in which the risk data information is single and serious asymmetry exists between hydropower stations, thereby providing a hydropower station operation risk control system based on blockchain.

The present invention provides a hydropower station operation risk control system based on blockchain, wherein participating nodes of respective hydropower stations act as nodes in a blockchain, and a first node is configured to generate blocks according to transaction information generated by each node, and add the blocks into a main chain, wherein the transaction information is information generated when each node transmits a risk parameterization solution to the blockchain; the first node is further configured to extract multiple types of risk information from the risk parameterization solution, generate different blocks according to each type of risk information respectively, and add the blocks corresponding to different types of risk information to corresponding slave chains respectively, and a second node is configured to call a slave chain and combine with risk information in the slave chain to form a risk decision for the hydropower station to which the second node belongs.

Optionally, the hydropower station operation risk control system based on blockchain provided by the present invention further includes: the second node is further configured to upload the risk parameterization solution used in forming the risk decision to the blockchain.

Optionally, in the hydropower station operation risk control system based on blockchain provided by the present invention, the risk information includes risk data information, risk analysis information, and risk threshold information, and the slave chains include call chains, analysis chains, and early warning chains; the call chains are configured to store the risk data information; the analysis chains are configured to store the risk analysis information; and the early warning chains are configured to store the risk threshold information.

Optionally, in the hydropower station operation risk control system based on blockchain provided by the present invention, the block includes a block head and a block body, the block head contains a hash value of a previous block, a random number, and a Merkle root, wherein the Merkle root is determined according to the hash value of each transaction information; and the block body includes transaction information generated by each node.

Optionally, in the hydropower station operation risk control system based on blockchain provided by the present invention, a first node is selected from the blockchain at regular time intervals to generate a block according to transaction information generated by each node in a current time period, the first node of the current time period is determined by the following steps: each node continuously generates random numbers and calculates a hash value of the block by combining with a hash value of a previous block, each random number and the transaction information generated by each node in the current time period, until the calculated hash value is less than the current difficulty value, and then the node corresponding to the hash value is determined as a candidate node; and the remaining nodes in the blockchain perform workload verification, equity verification, and space verification on the candidate node, and if the candidate node passes verification, the candidate node is determined as the first node in the current time period.

Optionally, in the hydropower station operation risk control system based on blockchain provided by the present invention, when a branching exists in the main chain, the number of honest nodes in each sub-chain is determined, and the sub-chain with the largest number of honest nodes is determined as a correct main chain.

Optionally, in the hydropower station operation risk control system based on blockchain provided by the present invention, the first node adds a blank block to the end of the main chain after adding the block generated according to transaction information to the main chain.

Optionally, in the hydropower station operation risk control system based on blockchain provided by the present invention, the second node uploads the risk parameterization solution used in forming the risk decision to the blockchain by the following steps: determining transaction information according to the risk parameterization solution and transmission parameters; generating a first fingerprint of the transaction information hash value by using an encryption algorithm; and signing the first fingerprint by using a private key of the hydropower station to which the second node belongs, so as to form a digital signature, and uploading the digital signature and the first fingerprint to the blockchain.

Optionally, the hydropower station operation risk control system based on blockchain provided by the present invention further includes: a third node calls the digital signature and the first fingerprint through the blockchain, decrypts the digital signature by using a public key of the hydropower station to which the second node belongs, and judges that a sender of the digital signature received by the third node is the second node if the decryption produces a second fingerprint of the hash value; and the third node compares the second fingerprint with the first fingerprint, and if the second fingerprint is the same as the first fingerprint, judges that the first fingerprint has not been tampered with, and acquires the transaction information according to the second fingerprint.

Optionally, the hydropower station operation risk control system based on blockchain provided by the present invention further includes: part of the nodes in the blockchain form an alliance chain.

Technical solutions of the present invention have the following advantages:

The present invention provides a hydropower station operation risk control system based on blockchain, participating nodes of respective hydropower stations act as nodes in a blockchain, upload the information related to the risk parameterization solution to the blockchain, the nodes of the remaining hydropower station can acquire data through the blockchain, data sharing is realized through the blockchain, and when a hydropower station is at risk, a risk decision can be formed by combining more complete and similar scheduling and risk data in the blockchain, moreover, in the system provided by the embodiment of the present invention, the risk parameterization solution is split into various types of risk information, different types of information are stored in different slave chains, and the information is classified and stored. The remaining nodes can call corresponding slave chains according to actual needs, and combine information in the slave chains to generate risk decisions that are suitable for themselves.

## Brief Description of the Drawings

In order to more clearly illustrate the technical solutions in the specific embodiments or in the prior art of the present invention, the following is a brief introduction of the accompanying drawings to be used in the description of the specific embodiments or the prior art, and apparently, the accompanying drawings in the following description are some embodiments of the present invention, and that other drawings may be obtained according to these drawings by those skilled in the art without any creative effort.

Fig. 1 is a schematic diagram of a blockchain system architecture in an embodiment of the present invention;
Fig. 2 is a structural schematic diagram of a block in an embodiment of the present invention;
Fig. 3 is a structural schematic diagram of a call chain, an analysis chain, and an early warning chain in an embodiment of the present invention;
Fig. 4 is a schematic diagram of a main chain after a branching exists in an embodiment of the present invention;
Fig. 5 is a schematic diagram showing that the second node uploads data to the blockchain and the third node calls data from the blockchain in an embodiment of the present invention;
Fig. 6 is a schematic diagram of two nodes forming an alliance chain on the contract of both parties in an embodiment of the present invention;
Fig. 7 shows a process of constructing the system and an application process in the embodiment of the present invention.

## Detailed Description of the Embodiments

Technical solutions of the present invention will be clearly and completely described below in combination with accompanying drawings, and apparently, the described embodiments are merely a part but not all of the embodiments of the present invention. Based on the embodiments in the present invention, all the other embodiments obtained by those skilled in the art without any creative effort shall all fall within the protection scope of the present invention.

In the description of the present invention, it should be noted that the terms "first", "second", and "third" are merely used for descriptive purposes and are not to be understood as indicating or implying relative importance.

In addition, the technical features involved in different implementations of the present invention described below can be combined with each other as long as they do not constitute a conflict therebetween.

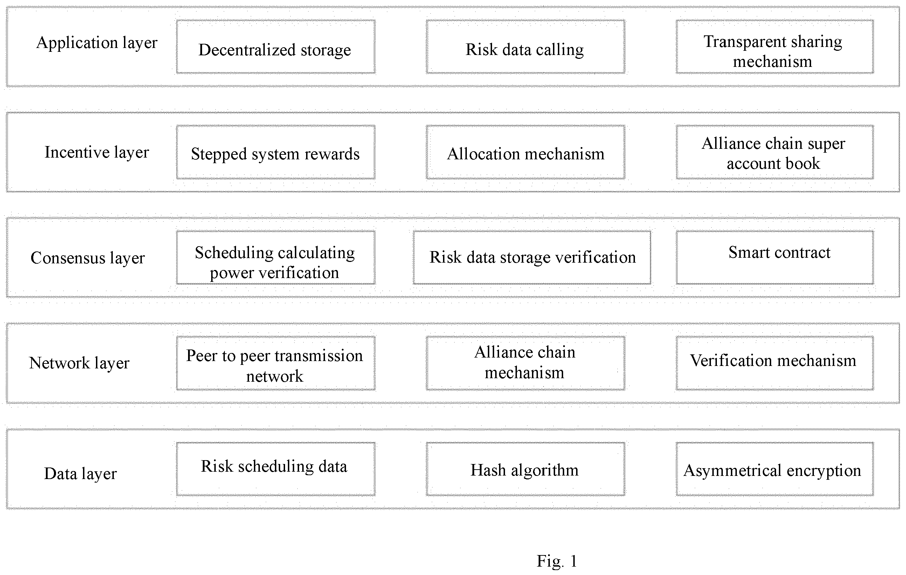

Embodiments of the present invention provide a hydropower station operation risk control system based on blockchain, with a system architecture as shown in Fig. 1, and the hydropower station operation risk control system is composed of a data layer, a network layer, a consensus layer, an incentive layer, and an application layer.

In the hydropower station operation risk control system based on blockchain, the participating nodes of respective hydropower station act as nodes in the blockchain.

A first node is configured to generate blocks according to transaction information generated by each node, and add the blocks into a main chain, wherein the transaction information is information generated when each node transmits a risk parameterization solution to the blockchain.

In an optional embodiment, stakeholders and resource service providers of each individual hydropower station in the stepped hydropower station act as nodes of the blockchain system and participate in the generation of blocks.

In an optional embodiment, the data information generated at the nodes over time is used as the content of each block, and the data information of the latter block will be based on the block of the previous time period, and from the perspective of spatio-temporal combination, the block of the downstream power station will also depend on the block of the upstream based on the dependence of the block of the latter time period on the block of the previous time period, thereby satisfying the natural law in the stepped hydropower station and the constraints and requirements of water quantity balance, and avoiding the problems of heavy workload and poor transmission capacity caused when each single power station records data alone, and also contributing to the fact that all parties involved in the entire blockchain system can act as maintainers and jointly maintain reliability of the entire blockchain.

In an optional embodiment, the transmission process resulting from uploading data corresponding to the parameterization solution of the node at each step in the application process of identification, monitoring, analysis, early warning, and regulation is treated as transaction information.

The first node is further configured to extract multiple types of risk information from the risk parameterization solution, generate different blocks according to each type of risk information respectively, and add the blocks corresponding to different types of risk information to corresponding slave chains respectively.

In the embodiment of the present invention, the risk parameterization solution is a complete set of solution, which includes the information related to monitoring data, the process of data analysis, the process of generating decisions, etc. However, because the risks faced by different hydropower stations are different, a complete set of parameterization solution is not applicable to all the hydropower stations, and in the embodiment of the present invention, the risk parameterization solution is split into multiple types of risk information, and different types of information are respectively stored in different slave chains. The remaining nodes can call corresponding slave chains according to actual needs, and combine information in the slave chains to generate risk decisions that are suitable for themselves.

A second node is configured to call slave chains and combine with risk information in the slave chain to form a risk decision for the hydropower station to which the second node belongs.

Embodiments of the present invention provide a hydropower station operation risk control system based on blockchain, participating nodes of respective hydropower stations act as nodes in a blockchain, upload the information related to the risk parameterization solution to the blockchain, the nodes of the remaining hydropower station can acquire data through the blockchain, data sharing is realized through the blockchain, and when a hydropower station is at risk, a risk decision can be formed by combining more complete and similar scheduling and risk data in the blockchain, moreover, in the system provided by the embodiment of the present invention, the risk parameterization solution is split into various types of risk information, different types of information are stored in different slave chains, and the information is classified and stored. The remaining nodes can call corresponding slave chains according to actual needs, and combine information in the slave chains to generate risk decisions that are suitable for themselves.

In an embodiment of the present invention, a value for a certain time is recorded by each block, and the slave chain records and integrates the information of the sub-modules and forms separate management and archiving.

In an optional embodiment, each node in the blockchain is not only a data provider but also a data user, i.e., each node can not only upload data information to the blockchain but also acquire data information from the blockchain, and each node needs to create an account to participate in maintenance of the blockchain, thereby forming a certain account that can achieve mutual applications and content interaction by calling another account for the purpose of sharing information.

In an optional embodiment, automated monitoring devices such as sensors in hydropower stations can also serve as generating nodes for information transmission that only generates data. The operation environment and application of nodes are implemented in a stable blockchain network environment. Even if there are changes in participating units such as an increase or decrease of nodes, the network will not be influenced. Therefore, hydropower stations do not need to consider the possible influence on the operation of the blockchain when increasing or decreasing manual input and automatic monitoring nodes of the Internet of Things, thereby fully showing flexibility.

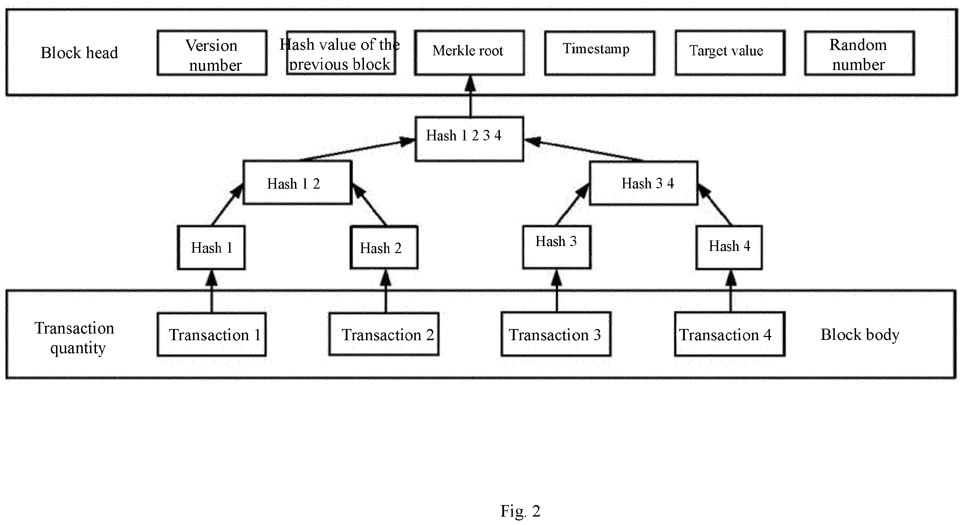

In an optional embodiment, as shown in Fig. 2, the block includes a block head and a block body, the block head includes a hash value of the previous block, a random number, and a Merkle root, the Merkle root is determined according to the hash value of each transaction information; and the block body includes the transaction information generated by each node.

In an optional embodiment, the hash value of the block is calculated according to the random number, the Merkle root, and the hash value of the previous block.

In an optional embodiment, the hash value is generated starting with the first block (also referred to as the CoinBase block), and the hash value is used as a link to the next block, and is arranged and paired in an order of data transmission for hydropower station operation and risk scheduling, and in combination with the time contract corresponding to the transaction time, a chain framework for efficient traceability of records is formed.

In an optional embodiment, the hash algorithm allows the input of any risk data information such as text, image, code, and other content to generate a character string of a certain length by corresponding calculations, and this string of characters is referred to as a hash value. In comparison with a variety of hash algorithms, the MD4 algorithm has been proven to be not secure enough; as to the improved MD5 algorithm, although more secure, its US runs more slowly and does not have "strong anti-collision". Therefore, the SHA-256 algorithm, which is balanced in all indicators, is proposed to be used in the embodiment of the present invention. The SHA-256 algorithm is configured to calculate the hash function, to obtain a Y value, and then the Y value is mapped to a range space composed of the entire 256-bit character string length:

$$Y = Hash(Parent\ block\ hash, Merkel\ root, Timestamp, Nonce)$$

This algorithm can not only achieve fast forward calculation speed, but also the output value of this algorithm is extremely sensitive to the input value, which shows that a slight difference in data will lead to the output of an extremely abnormal hash value, and can easily verify whether the information has been tampered with; an inverse operation of this algorithm is extremely difficult, that is, it is difficult to infer the original input content only by hash value, which also ensures the security of data. The original risk information data is generated into a 256-bit binary number, and can usually be expressed as a 64-bit hexadecimal number. This is a fixed-length fingerprint and provides a foundation for ensuring data security.

In an optional embodiment, the possibility of tampering with the main chain can be reduced by the hash value of the transaction information, and in the embodiment of the present invention, to further reduce the possibility of tampering with the blockchain, a Merkle tree is introduced, and through this tree-like data structure, a hash value is stored by all the nodes, and a hash value is generated for each transaction in the block, such that the hash value representing the data transmission transaction, and the Merkle root further representing the block, that is, the actual stored data of an account book, will change in a more complex way. Storing and calling the risk data in this way makes efficient use of tamper-evident properties of the hash algorithm.

In a block serving as a data storage unit as shown in Fig. 2, the change in each information generated by all the nodes within a certain time is recorded, and each new block head contains a timestamp generated by a block, and the hash value of the previous block is cited, to link into a chain data structure in a time sequence. Then aiming at the problems of generation and continuation of the blockchain, in the embodiments of the present invention, securely scheduled project participating nodes are adopted to take responsibility for the generation and approval of information transactions, and blocks are generated on time according to transaction records.

In an optional embodiment, on the basis of the perception that each information sending from each single hydropower station is considered as a single transaction, the information contained in these transactions such as: the time of occurrence, the type of risk, the monitoring of the risk and the content of the scheduling and decision taken by the hydropower station, and the size of the memory occupied by this one piece of information are all stored in the blockchain for that time period, and the series of transactions eventually form blocks. Then, basic data in the transaction, such as the time and address of the transaction, and the hash value of the previous block (judging the security of information) are placed in the block head of the current block, and the main chain is formed by stringing together one block after another through the hash value. Then all the nodes participating in the maintenance of the blockchain are able to call all the historical blocks, in other words, each node is able to have a copy of the history of the main chain and can receive any new transaction information. After the blockchain system is built with these data layers and network layers, the blockchain on a generalized level is then constructed, and a consensus layer is subsequently encapsulated with various consensus algorithms of the network nodes, and then the operating environment of a smart contract is formed for storing the state, data, and logic of the operation of the smart contract, etc.

In an optional embodiment, the embodiment of the present invention starts from adaptive adjustment and application of the blockchain technology to the stepped hydropower station, and ensures the formation of the application practice of the blockchain technology for safe scheduling of the stepped hydropower station. Based on characteristics of the transaction data itself, the block body in the blockchain makes some improvements in the record, and in combination with the requirements on data in the process of analysis and scheduling and decision formation of the stepped hydropower station, the embodiment of the present invention subdivides the historical risk data storage composition of the block body into five parts according to actual control: identification, monitoring, analysis, early warning and regulation, thereby contributing to a practical application form more applicable to the blockchain technology. The identification part consists of time, space, type, eigenvalue, and note distribution of risks; wherein the analysis part includes risk transmission relationship, risk trend prediction and risk solution response; wherein the early warning part is configured to reintegrate the data uploaded from the risk identification, monitoring and analysis parts to obtain a dynamic early warning threshold value, and the threshold value will be continuously revised and improved with the operation of the stepped hydropower station. Moreover, through the conditional threshold value and emergency threshold value of the risk, the regulation part is categorized into three parts: regular regulation, conditional regulation and emergency regulation, which can be called and managed according to specific situations to realize free flow of scheduling work.

In an optional embodiment, the risk information includes risk data information, risk analysis information, and risk threshold information, and the slave chain includes a call chain, an analysis chain, and an early warning chain; the call chain is configured to store the risk data information; the analysis chain is configured to store the risk analysis information; and the early warning chain is configured to store the risk threshold information.

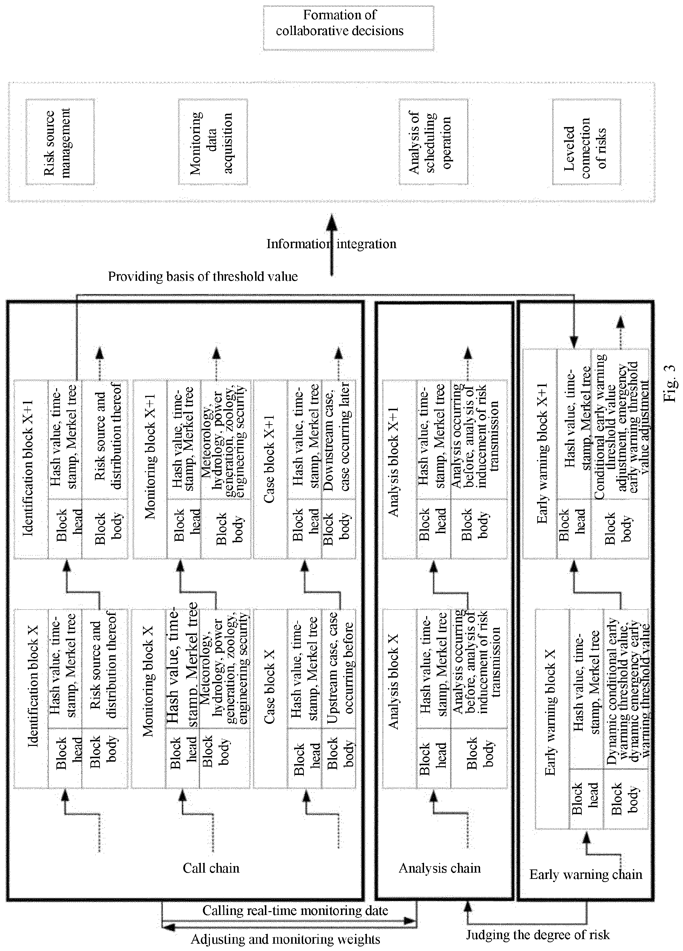

In an optional embodiment, the risk data information includes risk sources and their distribution, environmental data information, case information, etc., wherein the environmental data information includes meteorological information, hydrological information, power generation information, ecological information, engineering security information, etc., and the case information includes upstream cases, cases occurring before, downstream cases, cases occurring later, etc. Different risk data information is stored in different call chains, exemplarily, as shown in Fig. 3, the risk sources and their distribution are stored in the identification block, the environmental data information is stored in the monitoring block, and the case information is stored in the case block.

In an optional embodiment, statistical methods including, but not limited to, Bayesian network probability analysis, beta distribution probability analysis, full probability analysis, normal distribution probability analysis, and feature extraction methods may be adopted to acquire the minimum data required for different types of risk analysis and the distribution of measurement points thereof, thereby defining the scope of relevant analysis data and linking to reliable data sources, in the embodiment of the present invention, the risk source is identified with the Bayesian network probability analysis as an example, and the "inverse probability" idea of the Bayesian method is applied to trace back the risk practice to obtain the cause of the risk, and further probability calculation is performed to obtain the minimum values required for subsequent risk monitoring and the distribution of measurement points.

As to the storage and sharing of monitoring data, the embodiment of the present invention starts from an actual source of monitoring data, integrates manual interrogation and inspection as well as stage summary of automated monitoring technology, forms sub-reports from monitoring records and reports, and further aggregates to form stage summary after manual electronic signature. Then the advantages of both sides are combined, thereby ensuring data security while incorporating manual knowledge experience.

In an optional embodiment, the risk analysis information stored in the analysis chain includes the change of the calculation and analysis process in the risk case over time, as well as the final decision generation path and basis, mainly providing a basis for the subsequent multi-dimensional security scheduling of the stepped hydropower station.

In an optional embodiment, the risk threshold information stored in the early warning chain includes the conditions of each risk, and the change of the contingency threshold, and provides a basis for risk recognition and classification, and is continuously improved during operation, and expects a transition from the initial criticality scheduling to the multi-dimensional security scheduling.

In an optional embodiment, in the hydropower station operation risk control system based on blockchain provided by the embodiment of the present invention, a first node is selected in the blockchain at regular intervals, and blocks are generated according to the transaction information generated by each node in the current time period, and the first node in the current time period is determined by the following steps:

first, each node continuously generates a random number and calculates the hash value of the block by combining the hash value of the previous block, the random number and the transaction information generated by each node in the current time period until the calculated hash value is less than the current difficulty value, and the node corresponding to the hash value is determined as a candidate node.

The candidate node first performs propagation of the entire blockchain, and then, the remaining nodes in the blockchain perform workload verification, equity verification, and space verification on the candidate node, and if the verification is passed, the candidate node to which it belongs is determined as the first node in the current time period.

In the embodiment of the present invention, firstly, it is stipulated that as a node and participating party, each hydropower station has the right and function to maintain and package the risk data account book, then it is necessary to specify the specific responsible party for packaging the account books through consensus, that is, every once in a while the blockchain will select a node to generate a new block, and other nodes will jointly check whether the block is legal, so as to facilitate management and reduce the blockchain to generate branches. Subsequently, in the problem of deciding how the blockchain selects nodes to generate new blocks, false problems caused when malicious nodes create a large number of nodes are avoided, and more workload of data analysis reduction and inspection are brought about. For this reason, the embodiment of the present invention proposes a consensus on the threshold of generating new blocks, in other words, the nodes must pay resources to participate in the generation of new blocks, and classify according to the type of resources paid by the blockchain, for example, in practical application of the scheduling decision of the stepped hydropower station, workload verification of calculation resources and space verification on the storage resources need to be paid. Such a historical verification with fairness and paid resources can be selected to have the qualification of generating new blocks, but subsequently, a system reward and return and other mechanisms will also be set to promote good sustainable operation.

In performing the workload verification, the difficulty value is first calculated by the following formula:

$$difficulty = \frac{difficulty\_1\_target}{currentTarget},$$

wherein the current target value Target determines the current difficulty value, and suppose that the current difficulty is D, then:

$$currentTarget = \frac{difficulty\_1\_target}{D} = \frac{0xffff * 2^{208}}{D},$$

the block with the difficulty of D is further found, to obtain the number of times that the hash value needs to be computed:

$$\frac{D * 2^{256}}{0xffff * 2^{208}} = \frac{D * 2^{48}}{0xffff} = D * 2^{32}.$$

The size of the target value is calculated to be inversely proportional to the difficulty value through the target value of the workload, i.e., verification can be performed by performing a single hash function.

The network calculating power is allocated according to how many times the difficulty value is calculated to find a random number that makes the block hash value lower than the target value, and the target value is automatically updated periodically to dynamically adjust the block difficulty and maintain a stable block generation speed, and if the amount of message data exceeds the maximum difficulty limit, it is processed according to the maximum difficulty. The block head is then supplemented with random nonce values to facilitate the verification basis of the hash value and to confirm the transaction sequence and generate a definite contract address in message transmission.

Further extending from work verification to equity verification, the nature is to adopt a workload verification mechanism to form new blocks, and further an equity verification mechanism is adopted to maintain network security, i.e., verification nodes are required to provide ownership of a certain amount of information data encryption. When new blocks are created, the equity verification mechanism sets a "threshold" according to the ability of each node to develop new blocks to shorten the time required to reach a consensus.

In addition, the space verification is a technique for determining that a node can really use a certain storage space. In the embodiment of the present invention, the space verification is defined as a protocol between the certifier M and the verifier N, which is represented by sending a paragraph of data to each other to prove that the storage device of the node still has enough space, thereby reducing the problems brought about by insufficient storage, avoiding fraud of resource space, and greatly reducing waste of resources.

The finally generated main chain can be partially or fully stored in different nodes, or can be undertaken by different nodes separately. In this way, all the transaction information is stored inside the block body, and different types of data information are stored in the corresponding sub-level components, thereby not only achieving efficient management of information, but also further combining with the information in the block head to facilitate subsequent tracing and calling. Moreover, when the data of one node is tampered with, the data stored in the blockchain by other nodes can carry out effective verification of data originality with each other, which realizes a transmission mechanism for data security and transparency.

In an optional embodiment, in order to ensure that the nodes for generating new blocks can operate for a long time, a system reward and punishment strategy is provided in embodiments of the present invention. Exemplarily, the reward and punishment strategies can be determined by defining the calculating method of rewards and punishments according to incentive theories including, but not limited to, the Nash dynamics concept, the miner incentive model, Adams' fairness theory, Furlong's expectation theory, Charlie Munger's multivariate concept, etc. The following section is described with the Nash dynamics concept as an example.

The model is used to assess the defection of the participants who lead to the maximum utility from "honesty", so as to classify compliance or not, to further prove the compliance with reward function solution with different utilities according to work verification and equity verification, and further quantify the benefits of the reward or punishment mechanism to the operation of the blockchain. This reward and punishment model assumes that the node is a rational economic man, to consider how these income behaviors make the whole system reach equilibrium under the premise of income with a reward mechanism. Continuing to target the protocol settings of the blockchain for the security scheduling of the stepped hydropower station, on the one hand, bad protocol violations are increased, for example, if the hash value of a block is lower than a certain threshold value, this information is caused to be invalid, and then this threshold value is introduced to judge violation or not accordingly. If a block is generated by a specific party, the limit of the longest message also needs to be considered, to avoid the formal problems that arise during cryptographic decipherment. On the other hand, a reward mechanism is built, starting from the blockchain system, a certain amount of total rewards is proposed, when and only when the generated blocks are expanded by at least one block during the execution period, the rewards will be distributed to realize that at least one party receives a non-negative number of rewards and considers strategic allocation. In the process of building a reward and punishment mechanism, the embodiment of the present invention formulates a mechanism of rewards according to the amount of blocks, rewards according to weights, and total evaluation, rewards and punishments, etc. Continue to target the problem that the degree of reward and punishment is difficult to be accurately measured in the application process and the difficulty that the connection between data sources and calling problems is also difficult to be solved due to the limited operation time of the stepped hydropower stations, and in the embodiment of the present invention, a novel reward/punishment model is adopted, to fully combine the block weight, proportion of honest nodes and benefit conversion rewards, and comprehensively consider variables in actual operation and management, so as to effectively maintain stable operation of the blockchain.

Wherein, the reward type is based on proportional allocation rules, a tracking algorithm is established to count the number of blocks, such that each node gets a reward according to the final number of blocks contributed to the blockchain, and the reward mechanism is configured to output the final chain at the end of execution. The description is as follows:

select a segment of blocks, $\omega$ is an observer, P is the number of blocks contributed by the chain output of the observer, a proportional reward function $\tau( , )$ is defined to take two chains to and $\rho$ as input, and the output value of this function lies in the interval [0,1]:

$$\tau\left(C_{\omega,\xi},\rho\right) = \frac{M_{\rho,\xi}}{|C_{\omega,\xi}|} = \frac{M_{\rho,\xi}}{\sum_{|\hat{\rho}| \in P} M_{\hat{\rho},\xi}} \ ,$$

further the amount of reward is calculated:

$$\forall \xi \ \forall \rho \ \in P \ : \quad R_{\rho,\xi} = \tau\left(C_{\omega,\xi},\rho\right) \times R_{\omega,\xi} \ ,$$

$$\forall \xi : \ \sum_{\rho \ \in P} \tau\left(C_{\omega,\xi},\rho\right) = 1,$$

$$\forall \xi \ \forall \rho,\rho' \ \in P \ : \quad M_{\rho,\xi} > M_{\rho',\xi} \ \rightarrow \tau\left(C_{\omega,\xi},\rho\right) > \tau\left(C_{\omega,\xi},\rho'\right) \ ,$$

wherein $\xi$ is the execution tracing, $C_{\omega,\xi}$ is the output chain of $\omega$, $R_{\omega,\xi}$ is the total amount allocated by the protocol (the total system rewards R is greater than or equal to 0), $M_{\rho,\xi}$ is the number of blocks generated by P in the chain output by $\omega$, and $\rho$ is the random variable proportional factor for the rewards.

Wherein, the total number of rewards $R_{\omega,\xi}$ of $\xi$ is:

$$R_{\omega,\xi} = |C_{\omega,\xi}| \times R \ ,$$

$|C_{\omega,\xi}|$ is the length (with a unit of blocks) of the chain in which the blocks are generated, and the calculating model of rewards is thus obtained.

The calculating model for punishment is similarly obtained by simply replacing the generated new blocks with the number and proportion of nodes deviating from honest nodes.

In an optional embodiment, when the difficulty of being tampered with is increased from the generalization of risk account books, to ensure distributed data holding, the data received by each party needs to be tampered with, that is, the calculating power must reach more than 51% of the total calculating power of the whole system (which is impossible in reality), which will cause data security hazards.

Firstly, the possibility that the blockchain may be tampered with is calculated, and the probability distribution calculating methods including but not limited to Poisson distribution expectation, random distribution, uniform distribution, aggregated distribution, t-test and the like can be used for possibility calculation, and the Poisson distribution expectation calculation is used as an example for illustration in the embodiment of the present invention. Assuming that in the currently used blockchain CA, an attacking chain CB tries to tamper, then the probability of CB catching up and successfully attacking CA is as follows:

$$q_z = \begin{cases} 1 & p \le q \\ \frac{q}{p} & p > q \end{cases} ,$$

wherein $\rho$ is the probability that the honest node creates the next block; $q$ is the probability that the attacking node creates the next block, $q_z$ is the probability that the CB eliminates $z$ gaps and overtakes CA.

Continue to target the exploration for the above formula: if CA creates z more new blocks, whether the difficulty of being overtaken by CB is increased, then the following formula is obtained:

$$p_a = 1 - \sum_{k=0}^{z} \frac{\lambda^k e^{-\lambda}}{k!} \times \left(1 - \left(\frac{q}{p}\right)^{z-k}\right) \ ,$$

wherein $p_a$ is the probability that CB can tamper with CA after falling behind by z blocks, $\lambda$ is the Poisson distribution expectation, and:

$$\lambda = z\frac{q}{p},$$

as long as it does not control more than half of the calculating power of the whole network, it cannot be tampered with provided that it already falls behind by z blocks. In the embodiment of the present invention, z takes a value of 1. After generating a new block in the application process, a block is attached at the end of the new block to ensure that the transaction is absolutely secure. This also avoids the delay time of an information data transaction produced when generating too many new blocks, thereby preventing the difficulty of meeting the higher real-time requirements while also improving the degree of data confidentiality. Therefore, in the embodiment of the present invention, when a new block is generated, a smart contract is triggered to automatically attach a block, thereby effectively minimizing the success rate of an attacker attempting to tamper with data.

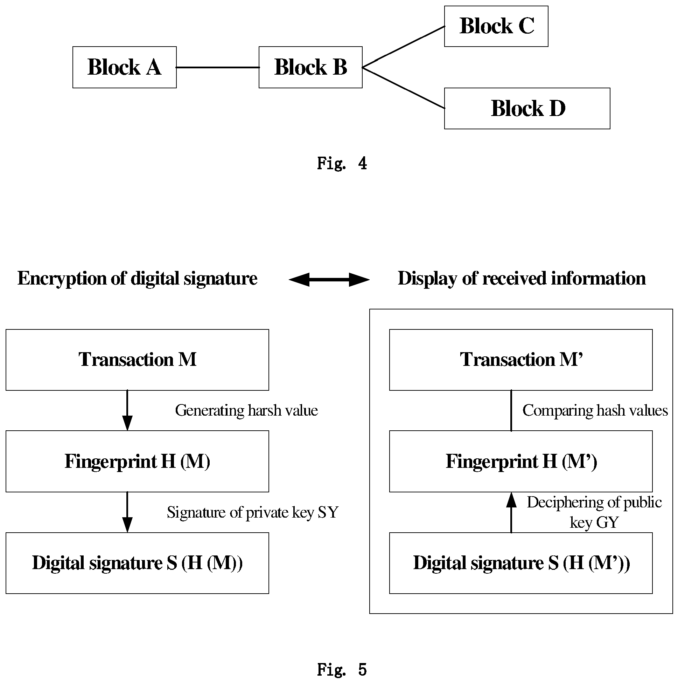

In an optional embodiment, the blockchain will inevitably have different historical risk data of different hydropower stations due to the metering mode and storage way of smart hydropower cloud blockchain nodes in actual operation, which reflects the branching of the blockchain history. For this purpose, in the embodiment of the present invention, the Nakamoto consensus algorithm is improved and introduced in use. On the one hand, considering the length of the chain and in combination with the number of resource authentication and the number of honest nodes, block D will be selected as shown in Fig. 4: since it is assumed that the subsequent nodes are all honest nodes, and logically this is proved by the most resource authentication or equities or time, and can also reflect that this is the safest and most reliable. On the other hand, in the present invention, improvement and optimization are performed to build a data link weight system of hydropower station scheduling operation, to support screening according to the proportion of data.

Wherein, honest nodes are nodes with correct data samples, and nodes generated by random sampling are called inert nodes, which are analyzed in depth. Firstly, accuracy estimation is carried out, all the nodes of stepped hydropower stations are in a relatively correct logical environment, for example, when the water level rises, there will be risks of flood control and security, and when the turbine generates electricity, vibration of a unit will cause risks of structural security hazards to the dam, so the nodes tend to choose correct classification. Next, the actual situation of the blockchain branching is explained, the (number of branching| is equal to n, and a correct and suitable chain is found to serve as a target, with preliminary reference to a "majority principle", it is considered that the more nodes participate in, the higher the degree of accuracy. It is recognized herein that the probability of each node being selected is the same, that is:

$$\forall \text{node } x \text{ , node } y \in \text{Nodes, } P_{node\ x} = P_{nodey}$$

wherein node represents a certain node and P represents the probability of the node being selected, so the more the number of nodes, the greater the accuracy of the total assessment of the chain.

Then honest nodes are selected to infer the size of the overall accuracy of the branching chain, corresponding to the inert nodes,

$$\begin{cases} P_{lazy}^{target} = 1/|C| & lazy\ nodes \\ P_{honest}^{target} > 1/|C| & honest\ nodes \end{cases},$$

wherein Ptarget represents the probability that nodes are accurate in the branching chain of the blockchain, C represents the number of branching of the blockchain and then distinguishes the inert nodes from honest nodes to solve expected branching lengths of different solutions:

$$\left|C_{target}^{honest}\right| = |nodes_{honest}| \times P_{honest}^{target} + |nodes_{lazy}| \times 1/|C| ,$$

$$\left|C_x^{honest}\right| = \frac{|nodes_{lazy}| \times \left(1 - P_{honest}^{target}\right)}{|C| - 1} + |nodes_{lazy}| \times 1/|C| ,$$

wherein $\left|C_{target}^{honest}\right|$ is an expected length of the corresponding branching with honest nodes and the target proposed to be compared, $\left|C_x^{honest}\right|$ is an expected length of the remaining branching chain with honest node x, and C represents the actual length of the current node.

In this way, the lengths of expected values are compared, then the expected values are compared with the length of the actual chain, as in the understanding that the accuracy of each node is further increased in the above formula, the honest nodes $P_{honest}^{target} > 1/|C|$, so the larger the number of honest nodes, the longer the expected length of the blockchain, and accordingly the smaller the accuracy influence produced by the remaining nodes, i.e., the closer to the actual operation situation, and such honest nodes can be selected.

Eventually, as to the weighting calculation by whether the node is an honest node, the natural weight of the honest node is greater. If correct data and calculation of A are more accurate than those of B, then when the quantity of nodes is not changed, the accuracy of the main chain will be improved. After calculating each branch chain until a chain is explicitly the longest, the most suitable branched chain is obtained as a continuation of the main chain.

The improved structure and flow of the blockchain are shown in Fig. 3, which achieves the functions of risk source management, monitoring data acquisition, scheduling operation analysis, and leveled risk connection through information integration of the main chain and three slave chains, ultimately leading to the target of forming collaborative decisions.

One of the early warning chains as an example is taken as an example to illustrate in detail the way in which the side chains are used. First of all, in terms of the way of security scheduling, the scheduling can be divided into two categories: criticality scheduling and balanced scheduling. At the beginning of its formation, the early warning chain firstly uses criticality control and its feedback mode according to the investigation and statistics of risk sources and analysis results of risk transmission relationship, that is, when facing the situation that the risk is about to exceed the bearing capacity of a hydropower station, when the risk is about to be caused or when the risk is just caused, to record data and stores data in the currently generated blocks, and constantly improve the data types and coverage from various aspects during multiple operations. A related risk area can be formed by the early warning chain, and corresponding threshold values can be constructed. In the operation after the feedback, these threshold values are avoided and the hierarchy of the threshold values is refined, for example, the threshold values are subdivided into conditional threshold values or early warning threshold values, which is "criticality" scheduling. As the blockchain continues to operate, it is also a process of discovering criticality, feeding back criticality, avoiding criticality and getting new criticality, during which reasonable regulation is completed. Moreover, the target of scheduling is expanded from single flood control and power generation to balanced planning of multiple targets such as shipping, irrigation, ecological flow and sediment flushing, and an engineering group is scheduled according to the idea of "criticality", which leads to the realization of multi-dimensional criticality scheduling. The multi-dimensional balanced scheduling is to take multi-dimensional criticality scheduling as a "process" and continue to supplement and improve the threshold value information in the blockchain to ensure that the critical threshold value is in development, and in the cyclic evolution of application and feedback with the participation of other side chains, the "trans-boundary" behavior of dynamic transmission of constantly complements and improves the threshold values of risk and scheduling, and when problems of all aspects can operate well under the criticality scheduling, a long-term multi-dimensional balanced regulation is realized, so as to form the conditional scheduling threshold values as well as emergency early warning threshold values in the early warning chain, on the one hand, multi-dimensional balanced regulation refers to a balance of multiple targets to form a homogenized ideal target; on the other hand, to be based on facing multi-dimensional security, the multi-dimensional risk early warning threshold value theory describes the transformation of risk as a quantitative to qualitative process, involving multi-dimensional risk elements in a variety of operating conditions, risk classification and regulation management are established.

Herein continue to take a landslide risk event as an example to illustrate the "nested feedback" application of the early warning chain of the present invention. Risk sources are subjected to identification and statistics from historical monitoring data, risk evolution and corresponding parameterization solutions, for example, risk sources that may induce landslides. Local effects from construction of reservoir dams, instability caused by deep water flow into bedrock resulting in shedding of submerged rock, hollowing and soaking of water bodies, saturated seepage and erosion damage from heavy rainfall, and man-made damage to topography and surface stability are recorded as predisposing factors. The types of single risk inducing factors, such as rainfall intensity in heavy precipitation inducement, vibration grade in local effect inducement, coefficient value in seepage inducement, water level and discharge in water erosion immersion inducement, exposure parameter in topography and surface damage inducement and so on are recorded. In the coped applications, the critical conditions for transforming risk sources into risk events are found, so as to draw up the threshold value of risk occurrence as the guidance for the application of risk management and control scheduling. In the follow-up single risk management and control solution, based on the application of criticality threshold values, the evaluation of scheduling effect is continuously fed back to form a continuously optimized dynamic threshold value for the purpose of avoiding the criticality of risk, and these management and control measures are expressed in the parameterization solution to maintain smart hydropower cloud blockchain. Subsequently, the risk is extended to the relationship between many types, for example, when heavy rainfall erodes the surface, the water level of the reservoir will also rise, resulting in erosion. With the increase of seepage, it will not only form rock mass shedding and cause landslide, but also aggravate the earthquake induced by the reservoir dam, which in turn leads to landslide and form landslide disaster-prone environment. In this way, based on the transmission and influencing relationship between multiple types of risks, a "set" of threshold values is obtained to ensure more comprehensive management and control and coping of risks. Continue to use cyclic nesting to the set of threshold values and combine with the characteristics and levels of risks, the threshold values are refined and adjusted into conditional threshold values and early warning threshold values to distinguish and form daily scheduling, conditional scheduling and emergency scheduling. In the following risk management and control scheduling operation, considering the application of multi-objective planning, the dynamic threshold value is constantly improved and a parameterization solution is formed for recording. Serving multi-scale and multi-range risk management and control ensures that stepped hydropower stations are smart under the application of a smart hydropower cloud platform.

Similarly, such a maintenance means of transmitting data information can be extended to all hydropower stations in the stepped development, the management department of each hydropower station acts as both an information provider and a data information user, and the practical path fully ensures the security and privacy, as well as the originality and availability of the data information. The hash value of the blockchain is further enhanced as a chain connecting the blocks, after the data is transmitted to the blockchain, if the data needs to be called, it can be retrieved according to the timestamp and hash value information of the block head and can also be used as a basis for data traceability.

Finally, the realization of comprehensive monitoring information has realistic possibility. Further optimization on the basis of architecture is not only the collection mechanism of information data, but also the processing and storage mode of data information. Not only the openness, transparency and sharing characteristics of blockchain technology for security scheduling of stepped hydropower stations are highlighted, but also the originality of data is ensured to a greatest extent and a powerful platform for information processing and summary is formed at each node, to avoid the shortcomings of insufficient data originality, difficult use and poor availability that may occur in information monitoring.

In this way, the application of each individual hydropower station in the blockchain part is regulated, from obtaining monitoring information data, and transmitting monitoring information and analyzing data, illustrating the way of transmitting and integrating data information, as well as the function of the blockchain itself and the way of its application, a strong support of the blockchain system by each hydropower station is expected to realize.

In an optional embodiment, after a risk decision is generated, the second node is also used to upload the risk parameterization solution used in forming risk decisions to the blockchain.

As shown in Fig. 5, the second node uploads the risk parameterization solution at the time of forming the risk decision to the blockchain by the following steps:

first, determining transaction information according to the risk parameterization solution and the transmission parameters;
then, generating a first fingerprint of the transaction information hash value using an encryption algorithm; and
finally, signing the first fingerprint by the private key of the hydropower station to which the second node belongs, forming a digital signature, and uploading the digital signature and the first fingerprint to the blockchain.

The third node calls the digital signature and the first fingerprint through the blockchain, decrypts the digital signature by the public key of the hydropower station to which the second node belongs, and if the decryption produces a second fingerprint with a hash value, the sender of the digital signature received by the third node is determined to be the second node; the third node compares the second fingerprint with the first fingerprint, and if the second fingerprint is the same as the first fingerprint, the first fingerprint is determined to be not tampered with, and transaction information is acquired according to the second fingerprint.

The hydropower station operation risk control system based on blockchain provided by embodiments of the present invention ensures that the obtained transaction information is not tampered with and improves the reliability of data by double verification of the digital signature and fingerprint information when the transaction information is acquired.

The embodiment of the present invention fully considers the problem of transmission encryption in the implementation process, and continues to introduce electronic signature technology for the implementation of information security assurance targeting that the risk data is not leaked or changed and the authenticity of the data is determined, i.e., the asymmetric encryption algorithm is further increased. When a certain hydropower station needs to confirm the called information, public keys are adopted to decipher the hash value of the transaction, for example, the public key can decipher the encrypted information, it means that the identity of the issuing hydropower station that was electronically signed by the private key before is reliable; and then the hash value obtained through deciphering by the public key is compared with the hash value of the original information, to confirm the originality of the document, that is, whether there is information tampering. It can be further stipulated that such an electronic signature itself can also be used for electronic deposition. The decentralized characteristic of the blockchain can also prompt the electronic signature to complement with a transparency mechanism in the process of data transmission, without influencing data transmission or causing security risks and leakage accidents in the process. In the present invention, encryption algorithms including but not limited to RSA algorithm, Elgamal algorithm, backpack algorithm, Rabin algorithm, D-H algorithm, ECC (elliptic curve encryption algorithm) and other encryption algorithms can be used to achieve the implementation of asymmetric encryption, and the RSA algorithm is taken as an example below to illustrate a forming manner of the asymmetric encryption algorithm.

As to the encryption process of the RSA algorithm, factorial and modulo operation are performed on a plaintext, and a modulo operation is performed on the result calculated by E power of plaintext and N to obtain a ciphertext, with the formula as follows:

$$ciphertext = plaintext^E \ mod \ N \ ,$$

wherein mod represents the modulo operation and the combination of $E$ and $N$ is the public key, which can be represented as: public key $\{E, N\}$.

Similarly, for the decryption of the RSA algorithm, perform D power calculation on the ciphertext and perform a modulo operation on N to obtain a plaintext, with the formula as follows:

$$plaintext = ciphertext^D \ mod \ N \ ,$$

wherein the combination of D and N is represented as: private key $\{D, N\}$.

Further, for the generation of N, E and D, first the formula for generating N is as follows:

$$N = p \times q,$$

wherein in the present invention, two prime numbers with a size of about 1024bit are selected for $p$ and $q$, which can be generated by a pseudo-random number generator with constant retries.

Next an intermediate number $L$, which is the least common multiple of $p-1$ and $q-1$, is calculated, and the calculating formula is as follows:

$$L = lcm(p - 1, q - 1),$$

wherein $lcm$ is the least common multiple calculating method and $q$ and $p$ follow the previous steps.

Continue to calculate the public key $E$ used for encryption, to make E a number greater than 1 and less than $L$, and E and $L$ are mutually prime, to make a pavement for calculating $D$, with the formula as follow:

$$1 < E,$$

$$gcd(E, L) = 1,$$

wherein $gcd$ represents a method for solving the maximum common divisor using a tumbling and dividing method.

Finally, D is solved, such that $D$ is greater than 1 and less than $E$, and satisfies the requirements of the modulo operation, with the formula as follows:

$$1 < E,$$

$$E \times D \ mod \ L = 1,$$

in this way, an asymmetric encryption method applied to the hydropower cloud blockchain is obtained.

In an optional embodiment, the nodes of the hydropower station are called through the blockchain to obtain a set of parameterization solutions, so it is not possible to perform direct rate setting operations and characteristic extraction as in the case of sample data sets, and further integration of the model is required. It is then stipulated in the embodiment of the present invention that, a closest parameterization solution is acquired based on the type and level of faced risk, and a "peer-to-peer" transmission method is used to obtain an approximate solution that can be used as a reference. Next, search for the most similar and analogous conditions and analyze differences between the reference solution and the faced risks, such as the differences in such details as spatial and temporal scales, development degrees, manifestations, and hazard levels of the risks; then, based on the same detailed information data, rate determination techniques such as SWAT hydrological models, deep neural networks, machine learning, and other methods are used to obtain a roughly digital outline of the current control risks. Then, continue to correct the previous rate determination results and make adaptive corrections and adjustments to the parameterization solution based on the state and boundary where these differences are located; and finally, the parameterization solution application for risk control is measured as a whole to realize effective calling and application of similar working conditions.

In an optional embodiment, some of the nodes in the blockchain form an alliance chain.

Especially for some parameterization solutions with privacy requirements, that is, the "contract-type" risk data information sharing between individual smart hydropower station nodes with high confidentiality requirements, on the basis of efficient transmission of blockchain technology, the alliance chain technology of super account books is used to avoid the data information privacy problem of parameterization solutions caused by the blockchain Ethernet transparency mechanism. Compared with the above-mentioned smart hydropower cloud blockchain, the smart alliance chain has more equity management functions and needs authorization from the management organization to join the system. The system is more controllable and only when transactions are performed between individual hydropower stations, new blocks can be generated, and the objective of saving space can be achieved.

Then a mechanism is formed, targeting at a data transmission sharing mechanism between individual nodes of not all the stepped hydropower stations, with contract issues of both parties with the main manifestation as an example, the mechanism includes: names of both parties of the node, account and address of the node, time and address validity of signing the contract and transaction costs, etc., after the contract text is confirmed, a private key authorized by the head of the node is used to encrypt the contract and generate a digital signature. The final approval form and the contract with signature encryption are also integrated and counted in the transactions, thereby reducing resource consumption and avoiding overall resource consumption while achieving more privacy.

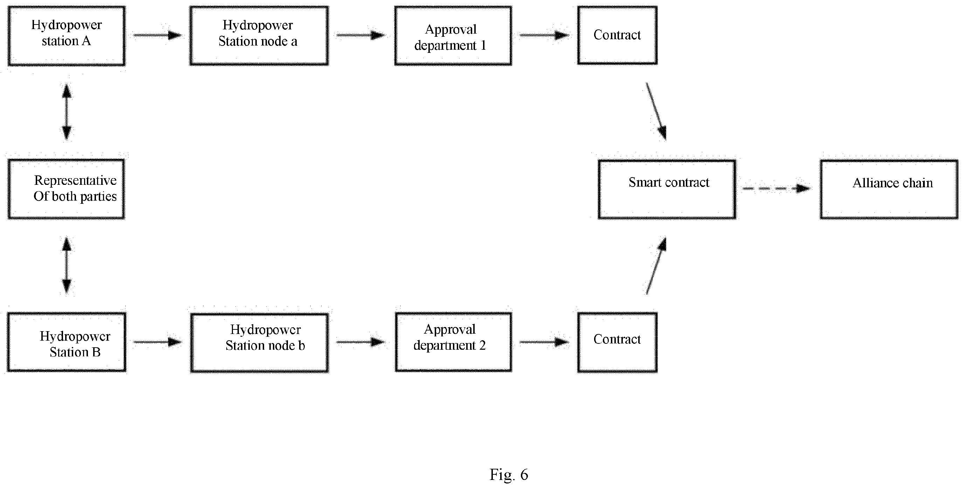

In an optional embodiment, some of the nodes in the blockchain form an alliance chain, Fig. 6 shows a process of forming an alliance chain between two nodes in the contract between the two parties, wherein the transaction information includes the type of data, time and address and the private key signatures of both parties, the contract text and information data will be presented in the form of transaction content and included in the blockchain. Structurally, on the basis of a blockchain, a contract layer chaincode and a member management module (MSP) are added, and the mechanism of a consensus layer is improved. Among them, the chaincode is an independently operating program, which is open to the participating party and the authorization party, and can only be called through a limited interface; and no other operation can call the chaincode. In the embodiments of the present invention, its characteristic of interacting with nodes in a grpc manner is used, in order to realize the operation of the account book. In the present invention, the chaincode is arranged in the "endorsement node", and when two transaction issuing parties submit applications to this node, the endorsement node first verifies the identity of the transaction, and after the verification is passed, the chaincode automatically executes and the data is transmitted into the block of the blockchain at the same time. Further the concept of Docker container technology is applied, the nodes responsible for chaincode and the nodes responsible for endorsement are respectively physically isolated to provide a lightweight and secure operating environment, and a blockchain calling mode is added correspondingly to the smart contract, and the permission to read and write data in the blockchain is screened. Among them, the membership management module is an abstraction that provides an operational architecture of the membership relationship, mainly to provide relevant identity authentication services for each component node in Fabric, and the embodiment of the present invention adopts a PKI (Public Keyinfrastructure) system to manage the identity information of the nodes participating in the alliance chain, and classifies and calls the permissions corresponding to different identities.

Ultimately, an alliance chain of individual hydropower stations within the blockchain of the stepped development system is expected to be built to realize the transmission of risk information data that requires encryption transmission and cannot be widely disseminated. In this way, the needs in practical use expect to be met, to achieve a private "contractual" data transmission and sharing mechanism.

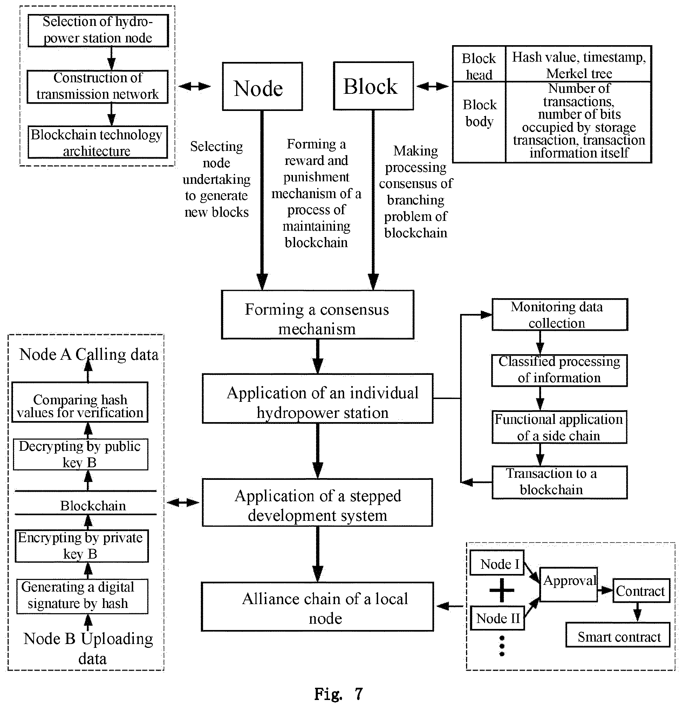

As shown in Fig. 7, as to the construction process and application process of the hydropower station operation risk control system based on blockchain provided by the embodiment of the present invention, after determining the nodes of the hydropower station, a transmission network is constructed, and the blockchain technology architecture is built, and the transmission network can be a P2P network. The nodes in the blockchain generate main chains according to transaction information and generate slave chains according to risk parameterization information. In constructing the hydropower station operation risk control system based on blockchain, the consensus mechanism of the blockchain is formed according to the method of determining the nodes for generating new blocks, the reward and punishment mechanism for forming the blockchain maintenance process, and the mechanism for handling with the branching problem of the blockchain.

After building the blockchain system, for a single hydropower station, monitoring data is collected, information is classified and processed, the side chain is called to form a risk decision, and the parameterization solution is uploaded to the blockchain. Among multiple hydropower stations, node *B* encrypts the data and uploads the data to the blockchain, and node *B* calls data from the blockchain and decrypts the data.

On the basis of the blockchain, an alliance chain is constructed for some nodes to further strengthen security of data transmission between individual nodes.

Obviously, the above embodiments are merely examples made for clarity and are not a limitation of the implementation. Other variations or changes in different forms may be made based on the above description for those skilled in the art. It is not necessary or possible to enumerate all the implementations herein. The obvious variations or changes derived therefrom still fall within the protection scope of the present invention.

**Claims**

1. A hydropower station operation risk control system based on blockchain, wherein participating nodes of respective hydropower stations act as nodes in a blockchain,

   a first node is configured to generate blocks according to transaction information generated by each node, and add the blocks into a main chain, wherein the transaction information is information generated when each node transmits a risk parameterization solution to the blockchain;
   **characterized in that**,
   the first node is further configured to extract multiple types of risk information from the risk parameterization solution, generate different blocks according to each type of risk information respectively, and add the blocks corresponding to different types of risk information to corresponding slave chains respectively;
   a second node is configured to call one of the slave chains and combine with risk information in the slave chain to form a risk decision for the hydropower station to which the second node belongs; and
   the second node is further configured to upload the risk parameterization solution used in forming the risk decision to the blockchain.

2. The hydropower station operation risk control system based on blockchain of claim 1, **characterized in that**

   the risk information comprises risk data information, risk analysis information, and risk threshold information, and the slave chains include call chains, analysis chains, and early warning chains;
   the call chains are configured to store the risk data information;
   the analysis chains are configured to store the risk analysis information; and
   the early warning chains are configured to store the risk threshold information.

3. The hydropower station operation risk control system based on blockchain of claim 1, **characterized in that** the block comprises a block head and a block body,

   the block head contains a hash value of a previous block, a random number, and a Merkle root, wherein the Merkle root is determined according to the hash value of each transaction information; and
   the block body comprises transaction information generated by each node.

4. The hydropower station operation risk control system based on blockchain of claim 3, **characterized in that** a first node is selected from the blockchain at regular time intervals to generate a block according to transaction information generated by each node in a current time period,
   the first node of the current time period is determined by the following steps:

   each node continuously generates random numbers and calculates a hash value of the block by combining with a hash value of a previous block, each random number and the transaction information generated by each node in the current time period, until the calculated hash value is less than the current difficulty value, and then the node corresponding to the calculated hash value is determined as a candidate node; and
   the remaining nodes in the blockchain perform workload verification, equity verification, and space verification on the candidate node, and if the candidate node passes verification, the candidate node is determined as the first node in the current time period.

5. The hydropower station operation risk control system based on blockchain of claim 1, **characterized in that**

when a branching exists in the main chain, the number of honest nodes in each sub-chain is determined, and the sub-chain with the largest number of honest nodes is determined as a correct main chain.

6. The hydropower station operation risk control system based on blockchain of claim 1, **characterized in that** the first node adds a blank block to the end of the main chain after adding the block generated according to transaction information to the main chain.

7. The hydropower station operation risk control system based on blockchain of claim 1, **characterized in that** the second node uploads the risk parameterization solution used in forming the risk decision to the blockchain by the following steps:

    determining transaction information according to the risk parameterization solution and transmission parameters; generating a first fingerprint of the transaction information hash value by using an encryption algorithm; and signing the first fingerprint by using a private key of the hydropower station to which the second node belongs, so as to form a digital signature, and uploading the digital signature and the first fingerprint to the blockchain.

8. The hydropower station operation risk control system based on blockchain of claim 7, **characterized by** further comprising:

    a third node calls the digital signature and the first fingerprint through the blockchain, decrypts the digital signature by using a public key of the hydropower station to which the second node belongs, and judges that a sender of the digital signature received by the third node is the second node if the decryption produces a second fingerprint of the hash value; and
    the third node compares the second fingerprint with the first fingerprint, and if the second fingerprint is the same as the first fingerprint, judges that the first fingerprint has not been tampered with, and acquires the transaction information according to the second fingerprint.

9. The hydropower station operation risk control system based on blockchain of claim 1, **characterized by** further comprising:
    part of the nodes in the blockchain form an alliance chain.


**Patentansprüche**

1. Auf Blockchain basiertes Wasserkraftwerkbetriebsrisiko-Steuerungssystem, wobei die teilnehmenden Knoten von jeweiligen Wasserkraftwerken als Knoten in einer Blockchain fungieren,

    ein erster Knoten konfiguriert ist, um Blöcke gemäß den von jedem Knoten erzeugten Transaktionsinformationen zu erzeugen und die Blöcke zu einer Hauptkette hinzuzufügen, wobei die Transaktionsinformationen Informationen sind, die erzeugt werden, wenn jeder Knoten eine Risikoparameterisierungslösung an die Blockchain überträgt;
    **dadurch gekennzeichnet, dass**
    der erste Knoten ferner konfiguriert ist, um mehrere Arten von Risikoinformationen aus der Risikoparameterisierungslösung zu extrahieren, verschiedene Blöcke entsprechend jeder Art von Risikoinformationen zu erzeugen und die Blöcke, die verschiedenen Arten von Risikoinformationen entsprechen, jeweils zu entsprechenden Nebenketten hinzuzufügen;
    ein zweiter Knoten konfiguriert ist, um eine der Slave-Ketten aufzurufen und mit den Risikoinformationen in der Slave-Kette zu kombinieren, um eine Risikoentscheidung für das Wasserkraftwerk zu treffen, zu dem der zweite Knoten gehört; und
    der zweite Knoten ferner konfiguriert ist, um die beim Bilden der Risikoentscheidung verwendete Risikoparameterisierungslösung in die Blockchain hochzuladen.

2. Auf Blockchain basiertes Wasserkraftwerkbetriebsrisiko-Steuerungssystem nach Anspruch 1, **dadurch gekennzeichnet, dass**

    die Risikoinformationen Risikodateninformationen, Risikoanalyseinformationen und Risikoschwelleninformationen umfassen, und die Slave-Ketten Aufrufketten, Analyseketten und Frühwarnketten umfassen;
    die Aufrufketten konfiguriert sind, um die Risikodateninformationen zu speichern;

die Analyseketten konfiguriert sind, um die Risikoanalyseinformationen zu speichern; und
die Frühwarnketten konfiguriert sind, um die Risikoschwelleninformationen zu speichern.

3. Auf Blockchain basiertes Wasserkraftwerkbetriebsrisiko-Steuerungssystem nach Anspruch 1, **dadurch gekennzeichnet, dass** der Block einen Blockkopf und einen Blockkörper umfasst,

der Blockkopf einen Hash-Wert eines vorherigen Blocks, eine Zufallszahl und eine Merkle-Wurzel enthält, wobei die Merkle-Wurzel entsprechend dem Hash-Wert jeder Transaktionsinformation bestimmt wird; und
der Blockkörper Transaktionsinformationen umfasst, die von jedem Knoten erzeugt werden.

4. Auf Blockchain basiertes Wasserkraftwerkbetriebsrisiko-Steuerungssystem nach Anspruch 3, **dadurch gekennzeichnet, dass** ein erster Knoten in regelmäßigen Zeitabständen aus der Blockchain ausgewählt wird, um einen Block gemäß den von jedem Knoten in einer aktuellen Zeitperiode erzeugten Transaktionsinformationen zu erzeugen,
der erste Knoten des aktuellen Zeitraums durch folgende Schritte bestimmt wird:

jeder Knoten erzeugt kontinuierlich Zufallszahlen und berechnet einen Hash-Wert des Blocks, indem er mit einem Hash-Wert eines vorherigen Blocks, jeder Zufallszahl und den Transaktionsinformationen, die von jedem Knoten in der aktuellen Zeitperiode erzeugt werden, kombiniert, bis der berechnete Hash-Wert kleiner ist als der aktuelle Schwierigkeitswert, und dann der Knoten, der dem berechneten Hash-Wert entspricht, als ein Kandidatenknoten bestimmt wird; und
die verbleibenden Knoten in der Blockchain führen eine Arbeitslastüberprüfung, eine Billigkeitsüberprüfung und eine Raumüberprüfung des Kandidatenknotens durch, und wenn der Kandidatenknoten die Überprüfung besteht, wird der Kandidatenknoten als der erste Knoten in der aktuellen Zeitperiode bestimmt.

5. Auf Blockchain basiertes Wasserkraftwerkbetriebsrisiko-Steuerungssystem nach Anspruch 1, **dadurch gekennzeichnet, dass**
wenn es in der Hauptkette eine Verzweigung gibt, die Anzahl der ehrlichen Knoten in jeder Unterkette bestimmt wird, und die Unterkette mit der größten Anzahl ehrlicher Knoten als korrekte Hauptkette bestimmt wird.

6. Auf Blockchain basiertes Wasserkraftwerkbetriebsrisiko-Steuerungssystem nach Anspruch 1, **dadurch gekennzeichnet, dass**
der erste Knoten am Ende der Hauptkette einen leeren Block hinzufügt, nachdem er den gemäß den Transaktionsinformationen erzeugten Block zu der Hauptkette hinzugefügt hat.

7. Auf Blockchain basiertes Wasserkraftwerkbetriebsrisiko-Steuerungssystem nach Anspruch 1, **dadurch gekennzeichnet, dass** der zweite Knoten die Risikoparameterlösung, die beim Bilden der Risikoentscheidung verwendet wird, durch die folgenden Schritte in die Blockchain hochlädt:

Bestimmen der Transaktionsinformationen gemäß der Risikoparameterlösung und den Übertragungsparametern;
Erzeugen eines ersten Fingerabdrucks des Hashwerts der Transaktionsinformationen unter Verwendung eines Verschlüsselungsalgorithmus; und
Signieren des ersten Fingerabdrucks unter Verwendung eines privaten Schlüssels des Wasserkraftwerks, zu dem der zweite Knoten gehört, um eine digitale Signatur zu bilden, und Hochladen der digitalen Signatur und des ersten Fingerabdrucks in die Blockchain.

8. Auf Blockchain basiertes Wasserkraftwerkbetriebsrisiko-Steuerungssystem nach Anspruch 7, **dadurch gekennzeichnet, dass** es ferner Folgendes umfasst:

ein dritter Knoten ruft die digitale Signatur und den ersten Fingerabdruck über die Blockchain auf, entschlüsselt die digitale Signatur unter Verwendung eines öffentlichen Schlüssels des Wasserkraftwerks, zu dem der zweite Knoten gehört, und entscheidet, dass ein Absender der von dem dritten Knoten empfangenen digitalen Signatur der zweite Knoten ist, wenn die Entschlüsselung einen zweiten Fingerabdruck des Hashwerts ergibt; und
der dritte Knoten vergleicht den zweiten Fingerabdruck mit dem ersten Fingerabdruck, und wenn der zweite Fingerabdruck mit dem ersten Fingerabdruck übereinstimmt, entscheidet er, dass der erste Fingerabdruck nicht manipuliert wurde, und erfasst die Transaktionsinformationen gemäß dem zweiten Fingerabdruck.

**9.** Auf Blockchain basiertes Wasserkraftwerkbetriebsrisiko-Steuerungssystem nach Anspruch 1, **dadurch gekennzeichnet, dass** es ferner Folgendes umfasst:
ein Teil der Knoten in der Blockchain bildet eine Allianzkette.

## Revendications

**1.** Système de contrôle des risques liés à l'exploitation d'une centrale hydroélectrique basé sur la blockchain, dans lequel les noeuds participants des centrales hydroélectriques respectives agissent en tant que noeuds dans une blockchain,

un premier noeud est configuré pour générer des blocs en fonction des informations de transaction générées par chaque noeud, et ajouter les blocs à une chaîne principale, les informations de transaction étant des informations générées lorsque chaque noeud transmet une solution de paramétrage du risque à la blockchain ;
**caractérisée en ce que**,
le premier noeud est en outre configuré pour extraire plusieurs types d'informations sur les risques de la solution de paramétrage des risques, générer différents blocs en fonction de chaque type d'informations sur les risques et ajouter les blocs correspondant aux différents types d'informations sur les risques aux chaînes auxiliaires correspondantes ;
un deuxième noeud est configuré pour appeler l'une des chaînes auxiliaires et la combiner avec les informations de risque de la chaîne auxiliaire afin de prendre une décision de risque pour la centrale hydroélectrique à laquelle appartient le deuxième noeud ; et
le deuxième noeud est en outre configuré pour télécharger dans la blockchain la solution de paramétrage du risque utilisée pour former la décision relative au risque.

**2.** Système de contrôle des risques liés à l'exploitation d'une centrale hydroélectrique basé sur la blockchain selon la revendication 1, **caractérisé en ce que**

les informations sur les risques comprennent des informations sur les données relatives aux risques, des informations sur l'analyse des risques et des informations sur les seuils de risque, et les chaînes auxiliaires comprennent des chaînes d'appel, des chaînes d'analyse et des chaînes d'alerte précoce ;
les chaînes d'appel sont configurées pour stocker les informations sur les risques ;
les chaînes d'analyse sont configurées pour stocker les informations relatives à l'analyse des risques ; et
les chaînes d'alerte précoce sont configurées pour stocker les informations relatives au seuil de risque.

**3.** Système de contrôle des risques liés à l'exploitation d'une centrale hydroélectrique basé sur la blockchain selon la revendication 1, **caractérisé en ce que** le bloc comprend une tête de bloc et un corps de bloc,

la tête de bloc contient une valeur de hachage d'un bloc précédent, un nombre aléatoire et une racine de Merkle, la racine de Merkle étant déterminée en fonction de la valeur de hachage de chaque information de transaction ; et
le corps du bloc comprend des informations de transaction générées par chaque noeud.

**4.** Système de contrôle des risques liés à l'exploitation d'une centrale hydroélectrique basé sur la blockchain selon la revendication 3, **caractérisé en ce qu'**un premier noeud est sélectionné dans la blockchain à intervalles de temps réguliers pour générer un bloc en fonction des informations de transaction générées par chaque noeud au cours d'une période de temps donnée,
le premier noeud de la période en cours est déterminé par les étapes suivantes :

chaque noeud génère continuellement des nombres aléatoires et calcule une valeur de hachage du bloc en combinant avec une valeur de hachage d'un bloc précédent, chaque nombre aléatoire et les informations de transaction générées par chaque noeud dans la période de temps actuelle, jusqu'à ce que la valeur de hachage calculée soit inférieure à la valeur de difficulté actuelle, puis le noeud correspondant à la valeur de hachage calculée est déterminé comme un noeud candidat ; et
les autres noeuds de la blockchain effectuent une vérification de la charge de travail, une vérification de l'équité et une vérification de l'espace sur le noeud candidat, et si le noeud candidat passe la vérification, le noeud candidat est déterminé comme étant le premier noeud dans la période de temps actuelle.

**5.** Système de contrôle des risques liés à l'exploitation d'une centrale hydroélectrique basé sur la blockchain selon la revendication 1, **caractérisé en ce que**
lorsqu'une ramification existe dans la chaîne principale, le nombre de noeuds honnêtes dans chaque sous-chaîne est déterminé, et la sous-chaîne ayant le plus grand nombre de noeuds honnêtes est considérée comme une chaîne principale correcte.

6. Système de contrôle des risques liés à l'exploitation d'une centrale hydroélectrique basé sur la blockchain selon la revendication 1, **caractérisé en ce que**
le premier noeud ajoute un bloc vierge à la fin de la chaîne principale après avoir ajouté à la chaîne principale le bloc généré en fonction des informations de transaction.

7. Système de contrôle des risques liés à l'exploitation d'une centrale hydroélectrique basé sur la blockchain selon la revendication 1, **caractérisé en ce que** le deuxième noeud télécharge la solution de paramétrage du risque utilisée pour former la décision de risque dans la blockchain en suivant les étapes suivantes :

déterminer les informations relatives à la transaction en fonction de la solution de paramétrage du risque et des paramètres de transmission ;
générer une première empreinte digitale de la valeur de hachage de l'information de transaction en utilisant un algorithme de chiffrement ; et
signer la première empreinte digitale à l'aide d'une clé privée de la centrale hydroélectrique à laquelle appartient le deuxième noeud, de manière à former une signature numérique, et télécharger la signature numérique et la première empreinte digitale dans la blockchain.

8. Système de contrôle des risques liés à l'exploitation d'une centrale hydroélectrique basé sur la blockchain selon la revendication 7, **caractérisé en ce qu'**il comprend en outre :

un troisième noeud appelle la signature numérique et la première empreinte digitale par l'intermédiaire de la blockchain, décrypte la signature numérique en utilisant une clé publique de la centrale hydroélectrique à laquelle appartient le deuxième noeud, et juge que l'expéditeur de la signature numérique reçue par le troisième noeud est le deuxième noeud si le décryptage produit une deuxième empreinte digitale de la valeur de hachage ; et
le troisième noeud compare la deuxième empreinte digitale avec la première empreinte digitale et, si la deuxième empreinte digitale est identique à la première, il estime que la première empreinte digitale n'a pas été falsifiée et acquiert les informations de transaction en fonction de la deuxième empreinte digitale.

9. Système de contrôle des risques liés à l'exploitation d'une centrale hydroélectrique basé sur la blockchain selon la revendication 1, **caractérisé en ce qu'**il comprend en outre :
une partie des noeuds de la blockchain forment une chaîne d'alliance.

| Application layer | Decentralized storage | Risk data calling | Transparent sharing mechanism |

| Incentive layer | Stepped system rewards | Allocation mechanism | Alliance chain super account book |

| Consensus layer | Scheduling calculating power verification | Risk data storage verification | Smart contract |

| Network layer | Peer to peer transmission network | Alliance chain mechanism | Verification mechanism |

| Data layer | Risk scheduling data | Hash algorithm | Asymmetrical encryption |

Fig. 1

Fig. 3

Block A — Block B

Block C

Block D

Fig. 4

Encryption of digital signature ⬌ Display of received information

Transaction M

Generating harsh value

Fingerprint H (M)

Signature of private key SY

Digital signature S (H (M))

Transaction M'

Comparing hash values

Fingerprint H (M')

Deciphering of public key GY

Digital signature S (H (M'))

Fig. 5

Fig. 6

EP 4 310 748 B1

Selection of hydro-power station node

Construction of transmission network

Blockchain technology architecture

Node

Block

| Block head | Hash value, timestamp, Merkel tree |
|---|---|
| Block body | Number of transactions, number of bits occupied by storage transaction, transaction information itself |

Selecting node undertaking to generate new blocks

Forming a reward and punishment mechanism of a process of maintaining blockchain

Making processing consensus of branching problem of blockchain

Forming a consensus mechanism

Node A Calling data

Comparing hash values for verification

Decrypting by public key B

Blockchain

Encrypting by private key B

Generating a digital signature by hash

Node B Uploading data

Application of an individual hydropower station

Monitoring data collection

Classified processing of information

Functional application of a side chain

Transaction to a blockchain

Application of a stepped development system

Alliance chain of a local node

Node I

Node II

+

Approval

Contract

Smart contract

Fig. 7